(19) Europäisches Patentamt
European Patent Office
Office européen des brevets

(11) **EP 4 301 625 B1**

(12) **EUROPÄISCHE PATENTSCHRIFT**

(45) Veröffentlichungstag und Bekanntmachung des Hinweises auf die Patenterteilung:
**30.07.2025 Patentblatt 2025/31**

(21) Anmeldenummer: **21838996.3**

(22) Anmeldetag: **07.12.2021**

(51) Internationale Patentklassifikation (IPC):
***B60Q 1/38*** *(2006.01)* ***B60Q 1/46*** *(2006.01)*
***B60Q 11/00*** *(2006.01)*

(52) Gemeinsame Patentklassifikation (CPC):
**B60Q 1/38; B60Q 1/381; B60Q 1/46; B60Q 11/007;**
B60Q 1/508

(86) Internationale Anmeldenummer:
**PCT/EP2021/084566**

(87) Internationale Veröffentlichungsnummer:
**WO 2022/184302 (09.09.2022 Gazette 2022/36)**

(54) **VERFAHREN ZUM BETREIBEN WENIGSTENS EINES FAHRTRICHTUNGSANZEIGERS EINES KRAFTFAHRZEUGS UND KRAFTFAHRZEUG**

VERFAHREN ZUM BETREIBEN WENIGSTENS EINES FAHRTRICHTUNGSANZEIGERS EINES KRAFTFAHRZEUGS UND KRAFTFAHRZEUG

PROCÉDÉ POUR FAIRE FONCTIONNER AU MOINS UN INDICATEUR DE DIRECTION D'UN VÉHICULE À MOTEUR ET VÉHICULE À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.03.2021 DE 102021105077**

(43) Veröffentlichungstag der Anmeldung:
**10.01.2024 Patentblatt 2024/02**

(73) Patentinhaber: **Audi AG**
**85045 Ingolstadt (DE)**

(72) Erfinder:
• **ARMBRUSTER, Tilman**
**85057 Ingolstadt (DE)**

• **BERLITZ, Stephan**
**86529 Schrobenhausen (DE)**
• **RESCHKE, Johannes**
**84085 Langquaid (DE)**
• **DEBELEC, Marcel**
**85053 Ingolstadt (DE)**

(74) Vertreter: **Lindner Blaumeier**
**Patent- und Rechtsanwälte**
**Partnerschaftsgesellschaft mbB**
**Dr. Kurt-Schumacher-Str. 23**
**90402 Nürnberg (DE)**

(56) Entgegenhaltungen:
DE-A1- 102013 002 875 DE-A1- 102017 219 535
DE-U1- 20 010 768 DE-U1- 202013 011 251
US-A1- 2012 212 320

EP 4 301 625 B1

## Beschreibung

Die Erfindung betrifft ein Verfahren zum Betreiben wenigstens eines Fahrrichtungsanzeigers eines Kraftfahrzeugs, wobei der Fahrtrichtungsanzeiger ab einem Betätigungszeitpunkt ein Leuchtsignal ausgibt, welches aus einer periodischen Wiederholung von abwechselnd aufeinanderfolgenden Anphasen, in denen wenigstens ein Beleuchtungsmittel des Fahrtrichtungsanzeigers leuchtet, und Ausphasen, in denen das Beleuchtungsmittel ausgeschaltet ist, besteht, wobei zum Betätigungszeitpunkt eine Abweichung einer Ausgangsphasenlage des Leuchtsignals zu einem vorgegebenen Referenzsignal ermittelt und mit einer vorgegebenen, dem Fahrtrichtungsanzeiger zugeordneten Zielphasenlage verglichen wird.

Die auch als Blinker eines Kraftfahrzeugs bezeichneten Fahrtrichtungsanzeiger von mehreren Kraftfahrzeugen blinken in der Regel jeweils in einem eigenen Takt. Bei einem Kraftfahrzeug bestimmt sich der Takt zumeist dadurch, wann der jeweilige Fahrtrichtungsanzeiger von einem Fahrer durch Betätigen eines Blinkerhebels angeschaltet wird. Startzeitpunkt für die jeweiligen Blinksignale ist dabei jeweils der Zeitpunkt der Betätigung des Blinkerhebels durch die Fahrer der Fahrzeuge, so dass bei einer Mehrzahl von Fahrzeugen aufgrund der individuellen Blinkerbetätigung kein fester Phasenbezug zwischen den von den Blinkern erzeugten Blinksignalen besteht. Ferner ist es auch möglich, dass bei einer Mehrzahl von Fahrzeugen diese jeweils Fahrrichtungsanzeiger aufweisen, welche mit einer leicht unterschiedlichen Frequenz blinken, wodurch ein zeitlich veränderlicher Phasenbezug zwischen den Blinksignalen entsteht.

Um im Straßenverkehr ein einheitliches Bild der Blinksignale mehrerer Fahrzeuge zu schaffen, ist es bekannt, die jeweiligen Blinksignale, welche von den Fahrzeugen bei einem betätigten Fahrtrichtungsanzeiger erzeugt werden, miteinander zu synchronisieren. Dazu sind aus dem Stand der Technik verschiedene Ansätze bekannt.

In DE 10 2013 002 875 A1 wird eine Steuerungseinrichtung zum Steuern von Richtungsanzeigen eines Kraftfahrzeugs beschrieben. Dabei ist die Steuerungseinrichtung derart ausgebildet, dass die Phase und/oder die Frequenz des Blinkens der Richtungsanzeigen des Kraftfahrzeugs mit der Phase und/oder der Frequenz des Blinkens der Richtungsanzeigen wenigstens eines Fremdfahrzeugs synchronisierbar ist.

In DE 10 2017 219 535 A1 wird ein Verfahren zum Betreiben eines Fahrtrichtungsanzeigers eines Kraftfahrzeugs beschrieben. Dabei wird ein Taktsignal zum Ansteuern des Fahrtrichtungsanzeigers ausgegeben, wobei anhand eines globalen Zeitsignals ein Referenztaktsignal bestimmt wird und das Taktsignal in Abhängigkeit von dem Referenztaktsignal ausgegeben wird.

DE 10 2016 220 054 B4 offenbart ein Verfahren zum Betreiben einer Anzeigeeinrichtung eines Führungskraftfahrzeugs einer Kraftfahrzeugkolonne und einer Anzeigeeinrichtung mindestens eines Folgekraftfahrzeugs. Dabei wird bei einer Kolonnenfahrt der Kraftfahrzeuge ein Lichtmustersignal bestimmt, welches über die Anzeigeeinrichtungen der mehreren Kraftfahrzeuge gleichzeitig oder in Form einer über mehrere Kraftfahrzeuge fortlaufenden Darstellung wiedergegeben wird.

DE 200 10 768 U1 beschreibt ein Steuermodul zur Steuerung blinkender Signalleuchten mit einer Uhr, die den Blinkrhythmus steuert. Der Gleichlauf der Uhr wird durch periodischen Abgleich der Borduhr mit einem zentralen Zeitnormal bewirkt. Der Abgleich erfolgt durch Radiosignale. Die Basisuhr und der damit verbundene Radiosender bzw. eines der beiden Elemente können sowohl erdgebunden als auch auf einer Orbitalbahn um die Erde stationiert sein.

US 2012/0212320 A1 beschreibt ein System zur Synchronisation von Fahrzeugblinkeinrichtungen. Dabei werden externe Timing-Signale genutzt, um die Gleichschaltung der Blinkoszillationen zu erreichen.

DE 20 2013 011 251 U1 betrifft eine fahrzeugübergreifende Blinktaktsynchronisation von Fahrtrichtungsanzeigern mittels Zeitdiensten oder Zeitsignalen. Dabei wird in zwei oder mehreren Fahrzeugen ein einheitlicher Blinktakt gebildet, welcher in Frequenz, Phasenlage und Puls-Pausenverhältnis exakt gleich ist oder zumindest für das menschliche Auge gleich erscheint.

Der Erfindung liegt die Aufgabe zugrunde, ein verbessertes Verfahren zum Betreiben wenigstens eines Fahrtrichtungsanzeigers eines Kraftfahrzeugs anzugeben.

Zur Lösung dieser Aufgabe sind bei einem Verfahren der eingangs genannten Art erfindungsgemäß die Merkmale des Anspruchs 1 vorgesehen.

**In** einer nicht zur Erfindung gehörenden Alternative ist denkbar, dass zum Betätigungszeitpunkt das Leuchtsignal mit einer ersten Ausphase begonnen wird, wobei die Zeitdauer der ersten Ausphase einem dem Phasenversatz zwischen der Ausgangsphasenlage und der vorgegebenen Zielphasenlage entsprechenden Zeitversatz entspricht, so dass eine der ersten Ausphase nachfolgende Anphase des Leuchtsignals in der Zielphasenlage zu dem Referenzsignal ist.

Das von dem Fahrtrichtungsanzeiger darzustellende Leuchtsignal umfasst eine periodische Wiederholung von abwechselnd aufeinanderfolgenden Anphasen und Ausphasen. In den Anphasen leuchtet das wenigstens eine Beleuchtungsmittel des Fahrtrichtungsanzeigers, während in den Ausphasen das wenigstens eine Beleuchtungsmittel des Fahrtrichtungsanzeigers abgeschaltet ist, so dass sich ein Blinken des Fahrtrichtungsanzeigers bzw. seines Beleuchtungsmittels ergibt. Bei Betätigung des Fahrtrichtungsanzeigers über das zugeordnete Betätigungselement zu einem Betätigungszeitpunkt erfolgt die Abgabe des Leuchtsignals über den Fahrtrichtungsanzeiger. Das abzustrahlende Leuchtsignal weist dabei eine Ausgangsphasenlage zu einem vorgegebenen Referenzsignal auf, wobei sich die Ausgangsphasenlage von der Lage des Betätigungszeitpunkts zu dem Referenzsignal ergibt.

Ein synchrones Blinken von mehreren Kraftfahrzeugen erzeugt ein einheitliches Bild im Straßenverkehr, was die Wahrnehmbarkeit von Fahrtrichtungsanzeigern und somit auch von angekündigten Fahrmanövern der Kraftfahrzeuge verbessert. Außerdem erzeugt ein synchrones Blinken von mehreren Kraftfahrzeugen ein Zusammengehörigkeitsgefühl bei Benutzern der zum synchronen Blinken ausgebildeten Kraftfahrzeuge.

Um eine Synchronisation von verschiedenen Fahrtrichtungsanzeigern zu ermöglichen, ist dem wenigstens einem Fahrtrichtungsanzeiger eine Zielphasenlage zugeordnet, wobei die Zielphasenlage eine Phasenlage angibt, die das Leuchtsignal zu dem vorgegebenen Referenzsignal aufweisen soll, um über mehrere Fahrzeuge hinweg einen synchronen Betrieb des jeweils wenigstens einen Fahrtrichtungsanzeigers der Fahrzeuge zu ermöglichen. Je nach der Lage des Betätigungszeitpunkts zu dem Referenzsignal ergibt sich ein unterschiedlicher Phasenversatz bzw. eine unterschiedliche Phasendifferenz zwischen der Ausgangsphasenlage zum Betätigungszeitpunkt und der Zielphasenlage, welches das Leuchtsignal zu dem Referenzsignal aufweisen soll. Zum Erzeugen des synchronen Blinkens ist es erforderlich, dass dieser Phasenversatz abgebaut wird oder dass das Entstehen eines solchen Phasenversatzes vermieden wird.

Durch das Vorsehen der Zielphasenlage kann sowohl ein synchrones Blinken von mehreren Fahrzeugen mit Leuchtsignalen, welche untereinander keinen Phasenversatz aufweisen und somit gleichzeitig blinken, erzeugt werden, als auch ein synchrones Blinken von mehreren Fahrzeugen, deren Leuchtsignale einen von null verschiedenen und insbesondere zeitlich nicht veränderlichen Phasenversatz untereinander aufweisen, so dass das Blinken in einer festgelegten Reihenfolge bzw. mit einem vorgegebenen Muster erfolgt.

Das synchrone Blinken von mehreren Fahrtrichtungsanzeigern einer Mehrzahl von Fahrzeugen erfordert es, dass die jeweiligen Leuchtsignale, welche über die Fahrtrichtungsanzeiger der Kraftfahrzeuge abgegeben werden, jeweils bezogen auf das Referenzsignal in der den jeweiligen Fahrtrichtungsanzeiger zugewiesenen Zielphasenlage abgestrahlt werden. Dies wird erfindungsgemäß dadurch erreicht, dass wenigstens zwei der Anphasen und/oder der Ausphasen des Leuchtsignals nach dem Betätigungszeitpunkt jeweils um einen unterschiedlichen Zeitdifferenzwert verlängert oder verkürzt werden, so dass danach die Phasenlage zwischen dem Leuchtsignal und dem Referenzsignal der vorgegebenen Zielphasenlage entspricht.

Durch das Ändern von wenigstens zwei Anphasen und/oder Ausphasen mit jeweils einem unterschiedlichen Zeitwert zum Angleichen der Ausgangsphasenlage an die Zielphasenlage wird ein kontinuierlicher Abbau des Phasenversatzes zwischen der Ausgangsphasenlage und der Zielphasenlage erreicht, wodurch die Anpassung der Phasenlage des Leuchtsignals eines Kraftfahrzeugs zu einem Solltakt eines weiteren Kraftfahrzeugs oder einer Gruppe von mehreren weiteren Fahrzeugen wahrnehmbar erfolgen kann. Diese Wahrnehmung des Einstellens der Taktsynchronisation der Leuchtsignale kann das Zusammengehörigkeitsgefühl, welches durch das synchrone Blinken erzeugt wird, weiter verstärken.

Die Summe der unterschiedlichen Zeitdifferenzwerte, um die die wenigstens zwei Anphasen und/oder Ausphasen jeweils verlängert werden, entspricht dabei einem Zeitversatz, welcher sich aus dem Phasenversatz zwischen der Ausgangsphasenlage und der Zielphasenlage errechnen lässt. Bei einem Phasenversatz p und einer Frequenz f des Leuchtsignals kann der Zeitversatz t mittels

$$t = (1/f) \cdot (p/360°)$$

bestimmt werden. Der gesamte, sich so ergebende Zeitversatz kann durch die mehreren unterschiedlichen Zeitdifferenzwerte, um die die wenigstens zwei Anphasen und/oder Ausphasen verlängert oder verkürzt werden, eingestellt werden, wonach der Phasenversatz zwischen der Ausgangsphasenlage und der Zielphasenlage abgebaut ist und das Leuchtsignal sich somit in Bezug zu dem Referenzsignal in der Zielphasenlage befindet. Dies kann unabhängig davon vorgenommen werden, ob das Leuchtsignal mit dem Beginn einer Anphase, dem Beginn einer Ausphase oder während einer Anphase bzw. Ausphase beginnt.

Alternativ dazu ist es in einer nicht zur Erfindung gehörigen Alternative möglich, dass zum Betätigungszeitpunkt das Leuchtsignal mit einer ersten Ausphase begonnen wird, wobei die Zeitdauer der ersten Ausphase dem Zeitversatz zwischen der Ausgangsphasenlage und der Zielphasenlage entspricht. Auf diese Weise ist eine der Ausphase nachfolgende Anphase des Leuchtsignals in der Zielphasenlage zu dem Referenzsignal. Auf diese Weise wird mithin eine Verzögerung der ersten Anphase erreicht, wobei die zeitliche Länge dieser Verzögerung dem Zeitversatz entspricht, welcher sich aus dem Phasenversatz zwischen der Ausgangsphasenlage und der Zielphasenlage ergibt. Dadurch wird vorteilhaft ermöglicht, dass möglichst rasch eine Synchronisierung zwischen dem Leuchtsignal nach dem Betätigungszeitpunkt und dem Referenzsignal beziehungsweise weiteren Kraftfahrzeugen möglich ist.

Es ist beispielsweise möglich, dass das Referenzsignal ein Zeitsignal ist, dessen Frequenz der Frequenz des Leuchtsignals entspricht, wobei als Zielphasenlage eine Phasenabweichung von Null Grad zwischen dem Referenzsignal und dem Leuchtsignal eingestellt wird. Auf diese Weise wird durch das Synchronisieren des Leuchtsignals auf das Referenzsignal das Leuchtsignal an das Referenzsignals angeglichen. Das Referenzsignal kann dabei beispielsweise auch als ein Solltakt aufgefasst werden. Neben dem Einstellen eines Phasenversatzes von Null Grad zu dem Referenzsignal können auch davon abweichende Phasenversatze eingestellt werden, gegebenenfalls auch unterschiedliche Phasenversatze in verschiedenen Kraftfahrzeugen, so dass zwischen zwei oder mehreren Kraftfahrzeugen auch andere Phasenbezüge als ein vollständiger Gleichtakt erzeugt werden können.

Erfindungsgemäß kann vorgesehen sein, dass eine Anphase und/oder Ausphase oder mehrere aufeinanderfolgende Anphasen und/oder Ausphasen jeweils um einen vorgegebenen, maximalen Zeitdifferenzwert verlängert oder verkürzt werden, wobei eine der wenigstens einen um den maximalen Zeitdifferenzwert verlängerten oder verkürzten Phase nachfolgende Anphase oder Ausphase um einen Restzeitdifferenzwert, welcher kleiner als der maximale Zeitdifferenzwert ist, verlängert oder verkürzt wird. Die Summen aus dem Restzeitdifferenzwert und den in den vorangehenden Phasen verlängerten oder verkürzten maximalen Zeitdifferenzwerten entspricht dabei dem Zeitversatz, welcher sich aus dem Phasenversatz zwischen der Ausgangsphasenlage und der Zielphasenlage ergibt.

Durch das Vorsehen eines maximalen Zeitdifferenzwerts kann ein maximaler Unterschied vorgegeben werden, um den jeweils einzelne Anphasen beziehungsweise Ausphasen höchstens verlängert oder verkürzt werden können. Dies ermöglicht es, dass bei einem vergleichsweise großen Phasenversatz zwischen der Ausgangsphasenlage und der Zielphasenlage beziehungsweise einem großen Zeitversatz ein Höchstwert definiert wird, um den die einzelnen Phasen jeweils verlängert und/oder verkürzt werden können.

Der maximale Zeitdifferenzwert verhindert, dass einzelne Anphasen und/oder Ausphasen eine große Abweichung von der Dauer einer unverlängerten oder unverkürzten Anphase beziehungsweise Ausphase aufweisen. Eine unverlängerte Anphase und/oder Ausphase kann beispielsweise eine Länge von 400 ms aufweisen, so dass sich eine Taktlänge eines eine Ausphase und eine Anphase umfassenden Takts von 800 ms ergibt. Der maximale Zeitdifferenzwert kann beispielsweise zwischen 10 ms und 100 ms, insbesondere 50 ms, betragen.

Da der Phasenversatz zwischen der Ausgangsphasenlage und der Zielphasenlage von dem Betätigungszeitpunkt abhängt, kann nach der Verlängerung bzw. Verkürzung von einer oder mehreren Anphasen und/oder Ausphasen ein Rest verbleiben, welcher kleiner als der maximale Zeitdifferenzwert ist. Zum Einstellen der Zeitdifferenz kann daher eine oder mehrere aufeinanderfolgende Anphasen und/oder Ausphasen jeweils um den maximalen Zeitdifferenzwert verlängert oder verkürzt werden, wonach eine nachfolgende Anphase und/oder Ausphase um den verbleibenden Restzeitdifferenzwert verlängert oder verkürzt wird.

Gemäß der Erfindung ist vorgesehen, dass mehrere aufeinanderfolgende Anphasen und/oder Ausphasen jeweils um einen mit zunehmendem zeitlichen Abstand vom Betätigungszeitpunkt abnehmenden Zeitdifferenzwert verlängert oder verkürzt werden. Dabei wird der Zeitdifferenzwert, um den die mehreren aufeinanderfolgenden Anphasen und/oder Ausphasen jeweils verlängert oder verkürzt werden, immer kleiner beziehungsweise geringer gewählt, je weiter die verkürzte beziehungsweise verlängerte Anphase und/oder Ausphase vom Betätigungszeitpunkt entfernt ist.

Auf diese Weise wird ein kontinuierlicher Abbau der zeitlichen Differenz zwischen einer verlängerten beziehungsweise verkürzten Anphase und/oder Ausphase und einer entsprechend unverlängerten beziehungsweise unverkürzten Anphase und/oder Ausphase erreicht. Diese mit zunehmenden Abstand vom Betätigungszeitpunkt abnehmenden Zeitdifferenzwerte können auch in Kombination mit einer oder mehreren Anphasen und/oder Ausphasen, welche um den maximalen Zeitdifferenzwert verlängert und/oder verkürzt werden, kombiniert werden, so dass beispielsweise zunächst nach dem Betätigungszeitpunkt eine oder mehrere Phasen um den maximalen Zeitdifferenzwert verlängert und/oder verkürzt werden, wonach eine verbleibende Restdifferenz durch mehrere, mit zunehmendem zeitlichen Abstand vom Betätigungszeitpunkt abnehmenden Zeitdifferenzwerte verlängert und/oder verkürzt werden.

Erfindungsgemäß ist vorgesehen, dass der Betrag, um den der Zeitdifferenzwert zwischen zwei jeweils aufeinanderfolgende, verlängerte oder verkürzten

Anphasen und/oder Ausphasen abnimmt, stets gleich ist. Dadurch kann das Anpassen des Leuchtsignals an die Zielphasenlage zu dem Referenzsignal bzw. das Anpassen an den Solltakt deutlich wahrgenommen werden, ohne dass ein störender Eindruck hervorgerufen wird.

In einer bevorzugten Ausgestaltung der Erfindung kann vorgesehen sein, dass die Anphase und/oder die Ausphase oder die Anphasen und/oder die Ausphasen verlängert werden, wenn der dem Phasenversatz des Leuchtsignals zu dem Referenzsignal entsprechende Zeitversatz größer als die halbe Periodendauer des Leuchtsignals ist, und dass die Anphase und/oder die Ausphase oder die Anphasen und/oder die Ausphasen verkürzt werden, wenn der der Phasenlage des Leuchtsignals zu dem Referenzsignal entsprechende Zeitversatz kleiner als die halbe Periodendauer des Leuchtsignals ist. Aufgrund der periodischen Natur des Leuchtsignals beziehungsweise des Referenzsignals kann eine Anpassung der Phasenlage zwischen dem Leuchtsignal und dem Referenzsignal sowohl durch eine Verlängerung als auch durch eine Verkürzung der Anphasen und/oder der Ausphasen des Leuchtsignals erreicht werden. Durch die Auswertung, ob der Zeitversatz zwischen den Signalen größer oder kleiner als die halbe Periodendauer ist, kann somit eine möglichst schnelle Anpassung des Leuchtsignals eines Referenzsignals erreicht werden, da nur der jeweils geringere Zeitversatz ausgeglichen werden muss.

Es ist in einer nicht zur Erfindung gehörenden Alternative möglich, dass bei einem Zeitversatz unterhalb oder gleich eines vorgegebenen Grenzwerts das Leuchtsignal wie vorangehend beschrieben mit einer Ausphase begonnen wird, um den dem Phasenversatz zwischen Ausgangsphasenlage und Zielphasenlage entsprechenden Zeitversatz zu erzeugen. Bei einem Zeitversatz oberhalb des Grenzwerts können dabei wie vorangehend beschrieben wenigstens zwei der Anphasen und/oder Ausphasen verlängert oder verkürzt werden, so dass das wahrnehmbare Heranführen des Leuchtsignals ab dem Betätigungszeitpunkt an die Zielphasenlage zu dem Referenzsignal bzw. an den Solltakt nur bei einem hinreichend großen Zeitversatz zum Betätigungszeitpunkt erfolgt.

Erfindungsgemäß ist möglich, dass das Referenzsignal, insbesondere zyklisch oder kontinuierlich, von wenigstens einem lokal oder global empfangbaren Zeitsignal abgeleitet wird. Die Verwendung eines lokal oder global empfangbaren Zeitsignals hat den Vorteil, dass mehrere Fahrzeuge in räumlicher Nähe jeweils dasselbe Zeitsignal empfangen und aus diesem in gleicher Weise das Referenzsignal ableiten können, so dass die Fahrtrichtungsanzeiger dieser Fahrzeuge nach erfolgter Synchronisation alle im selben Takt bzw. entsprechend ihren jeweils zum Referenzsignal eingestellten Zielphasenlagen blinken.

Als Zeitsignal kann dabei erfindungsgemäß ein Signal eines globalen Navigationssatellitensystems, ein Signal einer Funkuhr, ein Signal eines analogen Radios, ein Signal eines Digitalradios, ein Signal eines Mobilfunknetzes, ein Signal eines Kraftfahrzeugkommunikationsnetzes und/oder eine Zeitinformation eines Kommunikationsnetzes verwendet werden.

Es kann beispielsweise ein Zeitsignal eines globalen Navigationssatellitensystems wie GPS, Galileo, Glonass und/oder Beidou verwendet werden. Als ein Signal einer Funkuhr kann beispielsweise ein DCF77-Signal verwendet werden. Auch die Verwendung von Radiosignalen ist möglich, beispielsweise eines analogen RDS-Signals und/oder eines digitalen Radiosignals, insbesondere eines DAB-Signals und/oder eines DAB+-Signals. Auch verschiedene Signale von Mobilfunknetzen, welche ebenfalls eine Zeitinformation enthalten, können zur Abgleichung des Referenzsignals ebenso herangezogen werden wie spezifische Kraftfahrzeugkommunikationsnetze wie Car2X-Kommunikationsnetze und/oder Zeitinformationen eines Kommunikationsnetzes nach einem NTP- und/oder PTP-Standard.

Alle vorgenannten Signale stellen Signaltypen dar, welche auch zu anderen Zwecken bereits in einem Kraftfahrzeug empfangen werden können, so dass das Heranziehen solcher Signale in einfacher Weise möglich ist. Ferner gehen solche Referenzsignale alle auf eine Uhrzeit als festen Referenzpunkt zurück, so dass auch unterschiedliche Zeitsignale in verschiedenen Fahrzeugen zum Ableiten eines Referenzsignals verwendet werden können, wobei die Referenzsignale aufgrund des festen Zeitbezugs der verwendeten Zeitsignale jeweils ebenfalls einen festgelegten Bezug zueinander haben, insbesondere zumindest im Wesentlichen phasengleich sind. Auf diese Weise wird es vorteilhaft ermöglicht, in unterschiedlichen Fahrzeugen unterschiedliche Zeitsignale zu verwenden und/oder beispielsweise bei Ausbleiben des Empfangs eines der Zeitsignale ein anderes der vorbenannten Zeitsignale zu wählen. Beispielsweise kann aus dem empfangenen Zeitsignal eine UNIX-Zeit bestimmt werden, aus welcher wiederum ein eindeutiger Bezug für das Referenzsignal ermittelbar ist.

Erfindungsgemäß kann vorgesehen sein, dass bei ausbleibendem Empfang des Zeitsignals ein kraftfahrzeugseitig vorgegebenes Taktsignal als Referenzsignal verwendet wird. Wenn ein zugewiesenes Zeitsignal und/oder alle Zeitsignale nicht empfangen und somit nicht verwendet werden können, so kann ein kraftfahrzeugseitiges Taktsignal als Referenzsignal verwendet werden, um den normalen Betrieb des Fahrtrichtungsanzeigers, mithin also das Anzeigen des Leuchtsignals, zu ermöglichen. Auf diese Weise ist der Betrieb des Fahrtrichtungsanzeigers auch bei ausbleibendem Empfang des Zeitsignals aus Sicherheitsgründen möglich.

Das kraftfahrzeugseitig vorgegebene Taktsignal kann beispielsweise aus einem zu einem vorangehenden Zeitpunkt ermittelten Referenzsignal extrapoliert werden oder es kann ein Taktsignal verwendet werden, welches ohne einen Bezug zu dem Referenzsignal und/oder dem Zeitsignal ist, so dass mithin der Betrieb des wenigstens einen Fahrtrichtungsanzeiger bei ausbleibendem Empfang des Zeitsignals unsynchronisiert erfolgt.

In einer bevorzugten Ausgestaltung der Erfindung kann vorgesehen sein, dass als Zeitsignal eine Unixzeit verwendet wird, wobei der durch das Referenzsignal vorgegebene Takt des Leuchtsignals zu der dem Zeitpunkt 01.01.1970, 0:00:00,00 nach standardisierter Weltzeit entsprechenden Unix-Epoche mit einer Anphase beginnt. Durch die Unixzeit wird ab der Unix-Epoche, welche dem Zeitpunkt des 01.01.1970, 0:00:00,00 nach standardisierter Weltzeit (coordinated universal time, UTC) entspricht, die seitdem verstrichene Zeit aufaddiert. Beispielsweise kann die Unixzeit die aufaddierten, seit der Unix-Epoche vergangenen Millisekunden enthalten und somit in Form einer ganzen Zahl als ein eindeutiges Zeitmaß verwendet werden. Diese Zahl bzw. die Unixzeit kann zur Ableitung eines Referenzsignals verwendet werden, wobei der durch das Referenzsignal beschriebene Takt des Leuchtsignals zum Zeitpunkt der Unix-Epoche mit einer Anphase beginnt.

Durch eine Division mit Rest der Unixzeit zum Betätigungszeitpunkt des Fahrtrichtungsanzeigers durch die Dauer eines Takts des Leuchtsignals, welcher eine Anphase und eine darauffolgende Ausphase umfasst, kann der Zeitversatz zwischen dem Leuchtsignal und dem Referenzsignal bzw. der Unixzeit zum Betätigungszeitpunkt ermittelt werden. Anschließend kann, wie vorangehend beschrieben wurde, ein Abbau des Zeitversatzes zum Erreichen der gewünschten Zielphasenlage zwischen dem Leuchtsignal und dem Referenzsignal erfolgen.

Erfindungsgemäß kann vorgesehen sein, dass die Dauer der Anphasen und der Ausphasen des Leuchtsignals in der Zielphasenlage, insbesondere in einem Richtungsblinkbetrieb und/oder einem Warnblinkbetrieb des Fahrtrichtungsanzeigers, jeweils 400 ms beträgt. Die Dauer eines Takts, welcher eine Anphase und eine Ausphase umfasst, beträgt dabei entsprechend 800 ms. Bei anderen Betriebsmodi des Fahrtrichtungsanzeigers, zum Beispiel zum Kenntlichmachen eines erfolgreichen Öffnungs- oder Schließvorgangs und/oder einem Notbremsblinken, kann die gleiche oder eine andere Dauer der Anphasen und der Ausphasen bzw. des Takts verwendet werden. Bis zum Erreichen der Zielphasenlage kann die Dauer einer oder mehrerer Anphasen und/oder einer oder mehrerer Ausphasen von den 400 ms abweichen, um eine Anpassung des Phasenversatzes zum Erreichen der Zielphasenlage zu ermöglichen.

In einem bevorzugten Ausführungsbeispiel der Erfindung kann vorgesehen sein, dass das Referenzsignal und/oder die Zielphasenlage aus einem von einer Sensoreinrichtung des den Fahrtrichtungsanzeiger aufweisenden Kraftfahrzeugs erfassten Umfeldinformation abgeleitet wird, wobei die Umfeldinformation wenigstens einen betätigten Fahrtrichtungsanzeiger eines weiteren Kraftfahrzeugs abbildet, wobei eine Frequenz des Referenzsignals der Frequenz des in der Umfeldinformation abgebildeten Fahrtrichtungsanzeiger des weiteren Kraftfahrzeugs entspricht.

Auf diese Weise wird es ermöglicht, dass das Lichtsignal, welches von dem eigenen Kraftfahrzeug über den wenigstens einen Fahrtrichtungsanzeiger angezeigt wird, an ein Kraftfahrzeug im Umfeld des Kraftfahrzeugs, welches bereits ein Lichtsignal über eine von seinem Fahrtrichtungsanzeiger abstrahlt, angepasst wird. Dies ermöglicht eine Anpassung beziehungsweise eine Synchronisierung des Leuchtsignals des eigenen Fahrzeugs an das weitere Kraftfahrzeug, auch wenn das weitere Kraftfahrzeug den Takt seines Leuchtsignals nicht mit einem zum eigenen Fahrzeug entsprechenden Referenzsignal ermittelt. Als Sensoreinrichtung kann dabei zum Beispiel eine Kamera verwendet werden.

Erfindungsgemäß kann vorgesehen sein, dass das Referenzsignal und/oder die Zielphasenlage in Abhängigkeit einer Umgebungsinformation des den Fahrtrichtungsanzeiger aufweisenden Kraftfahrzeugs und/oder einer von einem weiteren Kraftfahrzeug über eine Kommunikationsverbindung übermittelten Phaseninformation ermittelt wird. Als Kommunikationsverbindung können dabei beispielsweise eine Car2X-Kommunikation, eine Visibile Light-Communication (VLC) und/oder eine Light-Fidelity-Kommunikation (LiFi) verwendet werden. Über die Kommunikationsverbindung kann von dem weiteren Kraftfahrzeug an das eigene Kraftfahrzeug eine Phaseninformation übermittelt werden, in deren Abhängigkeit das Referenzsignal und/oder die Zielphasenlage des Lichtsignals zu dem Referenzsignal bestimmt wird. Dies ermöglicht es, über mehrere Kraftfahrzeuge hinweg ein gemeinsames Lichtmuster, beispielsweise ein Lauflicht vergleichbar zu Lichtmarkierungen an Warnbarken beziehungsweise Baustellenmarkierungen, zu realisieren.

Die Kommunikationsverbindung, beispielsweise eine Car2X-Kommunikation, kann zum Austausch von einer Position der Kraftfahrzeuge in einer Reihe, beispielsweise hinter einer Haltelinie an einer Ampel oder ähnlichem, genutzt werden. Dabei kann insgesamt aus der Gesamtanzahl der dort stehenden Kraftfahrzeuge für jede Kraftfahrzeugposition ein eigenes Referenzsignal oder eine eigene Zielphasenlage zu einem gemeinsamen Referenzsignal ermittelt werden, so dass ein gemeinsames Erscheinungsbild des Abstrahlens der Leuchtsignale über die Fahrtrichtungsanzeiger ermöglicht wird. Bei einem Hinzukommen oder Wegfallen einzelner Fahrzeuge kann entsprechend eine Anpassung der jeweiligen Referenzsignale und/oder der Zielphasenlagen erfolgen, so dass durch ein erneutes Einstellen des Zielphasenversatzes in jedem Kraftfahrzeug ein gemeinsames Leuchtbild wie ein Lauflicht wieder hergestellt werden kann.

Als Umgebungsinformation kann erfindungsgemäß ein Abstand des Kraftfahrzeugs zu einer Haltelinie verwendet werden. Die Haltelinie kann sich dabei beispielsweise vor einer Ampel, am Ende einer Abbiegespur, vor einer Kreuzung, einer Einfahrt oder Ähnlichem befinden. Durch den Abstand des Kraftfahrzeugs zu der Haltelinie kann bei einer Mehrzahl von beispielsweise in einer Reihe stehenden Kraftfahrzeugen jeweils für die Kraftfahrzeuge zur Darstellung eines gemeinsamen Lichtbilds das Referenzsignal und/oder die Zielphasenlage ermittelt werden.

Erfindungsgemäß kann vorgesehen sein, dass die Phasenlage des Leuchtsignals zu dem Referenzsignal für die Dauer der Betätigung des Fahrtrichtungsanzeigers, insbesondere zyklisch oder kontinuierlich, mit der Zielphasenlage abgeglichen wird, wobei bei einer Abweichung der Phasenlage von der Zielphasenlage, welche größer als ein vorgegebener Grenzwert ist, wenigstens eine Anphase und/oder Ausphase des Leuchtsignals um einen Zeitdifferenzwert verlängert oder verkürzt werden, so dass danach die Phasenlage des Leuchtsignals zu dem Referenzsignal der vorgegebenen Zielphasenlage entspricht.

Dies ermöglicht eine direkte Resynchronisierung des Lichtsignals auf das Referenzsignal, so dass das Leuchtsignal möglichst präzise in der ihm zugewiesenen Zielphasenlage abgestrahlt werden kann. Auch können auf solche Weise kleine Unterschiede bei der Taktfrequenz, mit der das Leuchtsignal über den wenigstens einen Fahrtrichtungsanzeiger dargestellt wird, korrigiert werden. Diese direkte Synchronisierung auf das Referenzsignal kann zusätzlich oder alternativ zu einer indirekten Synchronisierung beziehungsweise einer zyklischen Ableitung des Referenzsignals aus dem empfangenen Zeitsignal vorgesehen sein.

**In** einer bevorzugten Ausgestaltung der Erfindung kann vorgesehen sein, dass wenigstens zwei jeweils einer unterschiedlichen Fahrtrichtung und/oder einer Warnsignalgabe zugeordnete Fahrtrichtungsanzeiger verwendet werden, wobei jeweils ein gleicher oder für die anzuzeigenden Fahrtrichtungen und/oder die Warnsignalgabe jeweils eine unterschiedliche Zielphasenlage verwendet wird. Zum Beispiel kann für linke Fahrtrichtungsanzeiger und rechte Fahrtrichtungsanzeiger, wenn diese einzeln zum Anzeigen einer beabsichtigten Fahrtrichtung oder Ähnlichem betätigt werden, jeweils eine andere Zielphasenlage verwendet werden.

Beispielsweise kann die Zielphasenlage für die linken Fahrtrichtungsanzeiger und die Zielphasenlage für die rechten Fahrtrichtungsanzeiger bezogen auf das Referenzsignal jeweils um 180° phasenverschoben sein, so dass beispielsweise an einer großen Kreuzung eine erste Gruppe von nach links abbiegenden Kraftfahrzeugen und eine zweite Gruppe von nach rechts abbiegenden Kraftfahrzeugen jeweils innerhalb der Gruppe synchronisierte Leuchtsignale aufweisen, wohingegen die beiden Gruppen jeweils einen Phasenversatz von 180° zueinander aufweisen. Auf diese Weise kann die Leuchtsignalgabe im Bereich der Kreuzung sehr übersichtlich gestaltet werden.

Entsprechend kann auch für eine Warnsignalgabe, bei der wenigstens zwei Fahrtrichtungsanzeiger, welche unterschiedlichen Richtungen zugeordnet sind, gleichzeitig betrieben werden, insbesondere sogenanntes Warnblinken, ein Zielphasenlage gewählt werden, welche sich von der oder den Zielphasenlagen für das Blinken, also für das Betätigen von nur einer Fahrtrichtung zugeordneten Fahrtrichtungsanzeigern, unterscheidet. Es ist auch möglich, dass bei Betätigung der Warnblinkanlage die Zielphasenlage des Warnblinkens der Zielphasenlage des linken Fahrtrichtungsanzeigers oder der Zielphasenlage des rechten Fahrtrichtungsanzeigers entspricht oder dass eine von diesen Zielphasenlage unterschiedliche Zielphasenlage verwendet wird. Es ist auch möglich, dass eine Betätigung des Warnblinkers ohne Phasensynchronisierung erfolgt. Letztes kann zum Beispiel der Fall sein, wenn das Warnblinken bei ausgeschalteter Zündung ein anderes Taktverhältnis als bei eigeschalteter Zündung, z.B. von Anphase zu Ausphase von 310 ms zu 490 ms bei ausgeschalteter Zündung statt von 400 ms zu 400 ms bei angeschalteter Zündung, aufweist.

Für ein erfindungsgemäßes Kraftfahrzeug ist vorgesehen, dass es wenigstens einen Fahrtrichtungsanzeiger und eine Steuerungseinrichtung umfasst, wobei die Steuerungseinrichtung zur Durchführung eines erfindungsgemäßen Verfahrens eingerichtet ist.

Die vorangehend in Bezug zu dem erfindungsgemäßen Verfahren beschriebenen Vorteile und Ausgestaltungen gelten entsprechend für das erfindungsgemäße Kraftfahrzeug.

Weitere Vorteile und Einzelheiten der Erfindung ergeben sich aus den im Folgenden beschriebenen Ausführungsbeispielen sowie anhand der Zeichnungen. Diese sind schematische Darstellungen und zeigen:

Fig. 1 ein Ausführungsbeispiel eines erfindungsgemäßen Kraftfahrzeugs,

Fig. 2 ein erstes Diagramm zur Erläuterung von Ausführungsbeispielen eines Verfahrens,

Fig. 3 ein zweites Diagramm zur Erläuterung eines nicht erfindungsgemäßen Ausführungsbeispiels eines Verfahrens,

Fig. 4 ein drittes Diagramm zur Erläuterung eines Ausführungsbeispiels eines erfindungsgemäßen Verfahrens,

Fig. 5 ein viertes Diagramm zur Erläuterung eines nicht erfindungsgemäßen Ausführungsbeispiels eines Verfahrens, und

Fig. 6 eine Darstellung von mehreren Kraftfahrzeugen zur Erläuterung der Ausführungsbeispiele.

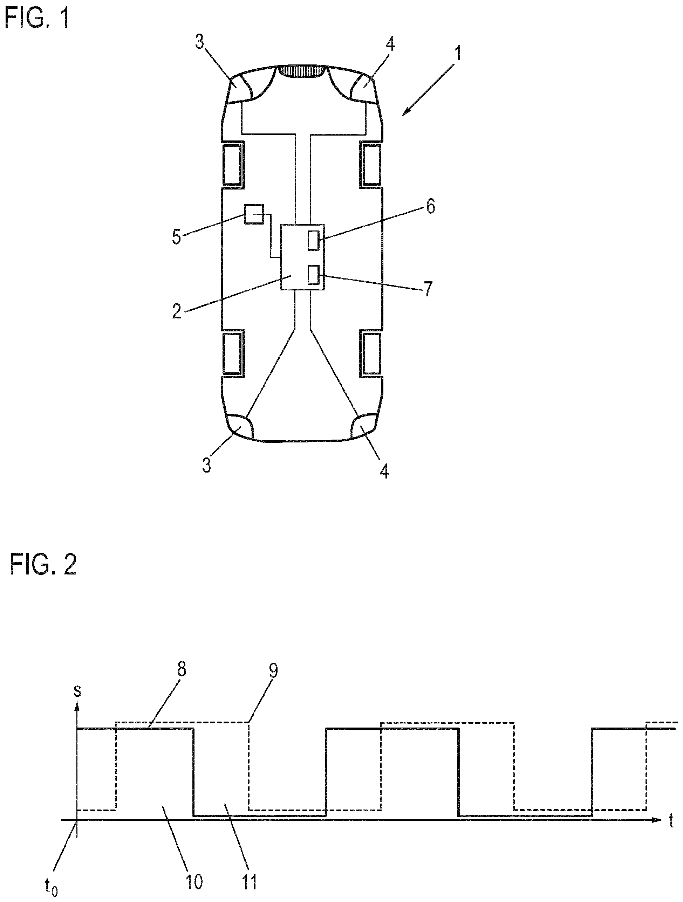

In Fig. 1 ist ein Ausführungsbeispiel eines erfindungsgemäßen Kraftfahrzeugs 1 dargestellt. Das Kraftfahrzeug 1 umfasst eine Steuerungseinrichtung 2 sowie mehrere Fahrtrichtungsanzeiger 3, 4. Dabei sind die Fahrtrichtungsanzeiger 3 an der linken Kraftfahrzeugseite und die Fahrtrichtungsanzeiger 4 an der rechten Kraftfahrzeugseite angeordnet, so dass die Fahrtrichtungsanzeiger 3 beispielsweise zum Kenntlichmachen eines Linksabbiegens und entsprechend die Fahrtrichtungsanzeiger 4 zum Kenntlichmachen eines Rechtsabbiegens oder vergleichbarer Fahrmanöver dienen.

Die Fahrtrichtungsanzeiger 3, 4 können über ein in einem Innenraum des Kraftfahrzeugs 1 angeordnetes Betätigungsmittel 5 betätigt werden, wobei die entsprechend betätigten Fahrtrichtungsanzeiger ein Leuchtsignal ausgeben, welches aus einer periodischen Wiederholung von abwechselnd aufeinanderfolgenden Anphasen, in denen wenigstens ein Beleuchtungsmittel der Fahrtrichtungsanzeiger leuchtet, und Ausphasen, in denen das Beleuchtungsmittel der Fahrtrichtungsanzeiger ausgeschaltet ist, besteht. Das Betätigen des Betätigungsmittels 5 und somit ein Ansteuern der Fahrtrichtungsanzeiger 3, 4 erfolgt zu einem beliebigen Zeitpunkt durch einen Fahrer des Kraftfahrzeugs 1 während des Betriebs des Kraftfahrzeugs 1.

Das Steuergerät 2 ist dazu ausgebildet, ein Referenzsignal zu erzeugen und kann dazu, wie nachfolgend genauer beschrieben wird, an eine Kommunikationseinrichtung 6 der Steuerungseinrichtung 2 übermittelte Informationen und/oder von einer Empfangseinrichtung 7 der Steuerungseinrichtung 2 empfangene Informationen verwenden. Das zu einem beliebigen Betätigungszeitpunkt erzeugte Leuchtsignal der Fahrtrichtungsanzeiger 3, 4 hat je nach der Lage des Betätigungszeitpunktes zu dem Referenzsignal einen unterschiedliche Ausgangsphasenversatz bzw. eine unterschiedliche Ausgangsphasendifferenz zu dem Referenzsignal.

Dies ist in Fig. 2 dargestellt. In dem Diagramm ist auf der Abszisse die Zeit und auf der Ordinate schematisch jeweils ein Signalpegel s eines Leuchtsignals 8 und eines Referenzsignals 9 dargestellt. Das Referenzsignal 9 ist dabei aus Gründen der Übersichtlichkeit gestrichelt dargestellt. Das Leuchtsignal 8 umfasst einen periodischen Takt mit einer vorgegebenen Frequenz, wobei jeder Takt eine Anphase 10, dargestellt durch den hohen Signalpegel, und eine Ausphase 11, dargestellt durch den niedrigen Signalpegel, umfasst. Das Referenzsignal weist ebenfalls eine solche Taktung auf. Ersichtlich besteht zwischen dem Leuchtsignal 8 und dem Referenzsignal 9 zum Zeitpunkt $t_0$, welcher dem Betätigungszeitpunkt entspricht, ein Phasenversatz. Dieser Phasenversatz kann auch als Zeitversatz aufgefasst werden, welcher zwischen dem Leuchtsignal 8 und dem Referenzsignal 9 besteht.

Um die Zielphasenlage zwischen dem Leuchtsignal 8 und dem Referenzsignal 9 zu erreichen, können durch die Steuereinrichtung 2 wenigstens zwei der Anphasen 10 und/oder der Ausphasen 11 des Leuchtsignals 8 nach dem Betätigungszeitpunkt $t_0$ um jeweils einen unterschiedlichen Zeitdifferenzwert verlängert und/oder verkürzt werden, so dass danach die Phasenlage des Leuchtsignals 8 zu dem Referenzsignal 9 einer vorgegebenen Zielphasenlage entspricht.

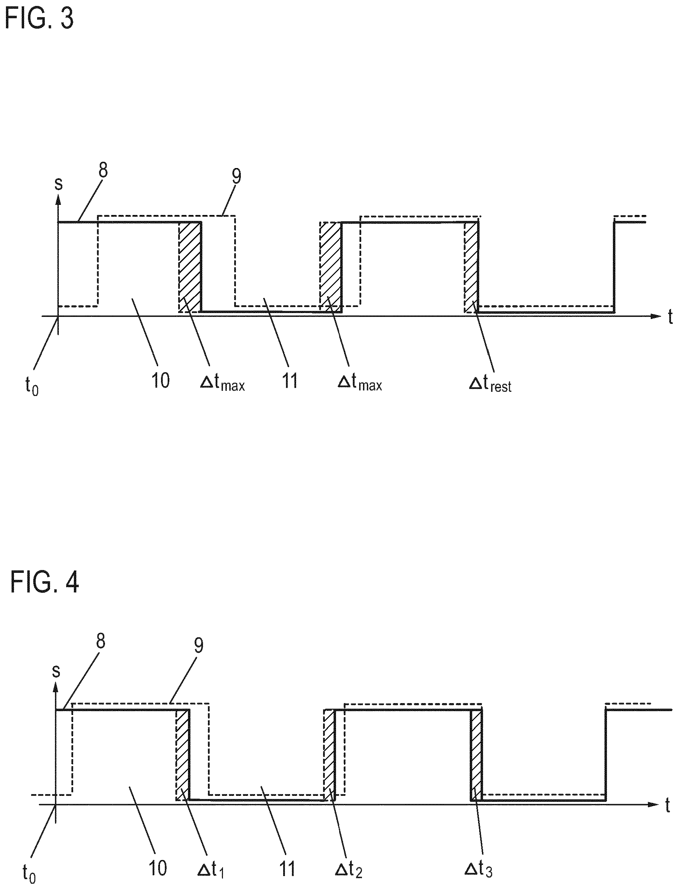

Dies ist beispielhaft in Fig. 3 für ein nicht erfindungsgemäßes, erstes Ausführungsbeispiel dargestellt, wobei als vorgegebene Zielphasenlage eine Phasenlage von 0° zwischen dem Leuchtsignal 8 und dem Referenzsignal 9 eingestellt wird. Dazu wird die erste Anphase 10 nach dem Betätigungszeitpunkt $t_0$ um eine maximale Zeitdifferenz $\Delta t_{max}$ verlängert. Die entsprechende Verlängerung der Anphase 10 ist durch den schraffierten Bereich 12 dargestellt.

Auch die der Anphase 10 nachfolgende Ausphase 11 wird entsprechend um den maximalen Zeitdifferenzwert $\Delta t_{max}$ verlängert. Die anschließende, der Ausphase 11 nachfolgende, weitere Anphase wird um einen Restzeitdifferenzwert $\Delta t_{rest}$ verlängert, so dass insgesamt eine Zeitdifferenz von 2 x $\Delta t_{max}$ + $\Delta t_{rest}$ zwischen dem Leuchtsignal 8 und dem Referenzsignal 9 eingestellt wurde, wobei im vorliegenden Ausführungsbeispiel diese Zeitdifferenz dem Phasenversatz zwischen dem Leuchtsignal 8 und dem Referenzsignal 9 entspricht. Diese Anpassung ist rein beispielhaft, je nach Größe des Phasenversatzes zwischen dem Leuchtsignal 8 und dem Referenzsignal 9 kann auch eine andere Anzahl an Anphasen und/oder Ausphasen um die maximale Zeitdifferenz $\Delta t_{max}$ verlängert werden.

Die zeitliche Dauer der Anphase 10 und der Ausphase 11 kann jeweils beispielsweise 400 ms betragen, so dass sich insgesamt für einen Takt des Leuchtsignals 8 eine Taktdauer von 800 ms ergibt. Wenn beispielsweise ein Zeitversatz von 220 ms zwischen dem Leuchtsignal 8 und dem Referenzsignal 9 erhalten wird und die maximale Zeitdifferenz $\Delta t_{max}$ zu 50 ms pro einzelner Phase bestimmt ist, kann z. B. eine Synchronisierung des Leuchtsignals 8 auf das Referenzsignal 9 durch das Verlängern von jeweils zwei Anphasen und zwei Ausphasen um jeweils 50 ms erfolgen, wobei eine nachfolgende Anphase durch eine Restzeitdifferenz $\Delta t_{rest}$ von 20 ms verlängert wird, so dass eine Anpassung des Leuchtsignals 8 an das Referenzsignal 9 innerhalb von fünf Phasen erfolgt. Auch eine Aufteilung der sich ergebenden Restzeitdifferenz $\Delta t_{rest}$ auf mehrere Anphasen und Ausphasen ist möglich, so dass zum Beispiel statt einer Verlängerung der nachfolgenden Anphase um die Restzeitdifferenz $\Delta t_{rest}$ von 20 ms diese Anphase und die darauffolgende Ausphase und jeweils $\Delta t_{rest}/2$, also 10 ms, verlängert werden.

Ein weiteres, erfindungsgemäßes Ausführungsbeispiel einer Anpassung ist im Diagramm in Fig. 4 dargestellt. Dabei erfolgt eine Anpassung der Ausgangsphasenlage zwischen dem Leuchtsignal 8 und dem Referenzsignal 9 auf die Zielphasenlage, also einen Phasenversatz von 0°, durch das Verlängern mehrerer aufeinanderfolgender Anphasen und Ausphasen um jeweils einen mit zunehmendem zeitlichen Abstand vom Betätigungszeitpunkt abnehmenden Zeitdifferenzwert.

Die erste Anphase 10 nach dem Betätigungszeitpunkt $t_0$ wird dabei um einen Zeitdifferenzwert von $\Delta t_1$ verlängert, die darauffolgende Ausphase 11 um einen Zeitdifferenzwert $\Delta t_2$ sowie die darauffolgende Anphase um einen Zeitdifferenzwert $t_3$, wobei $\Delta t_3$ kleiner als $\Delta t_2$ und $\Delta t_2$ kleiner als $\Delta t_1$ ist. Insgesamt kann so in den drei Phasen ein Zeitversatz zwischen dem Leuchtsignal 8 und dem Referenzsignal 9 von $\Delta t_1$ plus $\Delta t_2$ plus $\Delta t_3$ ausgeglichen werden. Durch das Ausgleichen dieses Zeitversatzes zwischen dem Leuchtsignal 8 und dem Referenzsignal 9 kann das Leuchtsignal 8 in Bezug zu dem Referenzsignal von der Ausgangsphasenlage in die Zielphasenlage gebracht werden.

Es ist auch möglich, dass ein Angleichen in mehr als drei Phasen erfolgt, beispielsweise kann bei einer Phasendauer von 400 ms und einem Versatz 220 ms zum Solltakt bzw. zum Referenzsignal 9 eine erste Phase z. B. einer Phasendauer von 450 ms, eine zweite mit einer Phasendauer von 444 ms , eine dritte mit einer Phasendauer von 438 ms, eine vierte mit einer Phasendauer von 432 ms, eine fünfte mit einer Phasendauer von 426 ms, eine sechste mit einer Phasendauer von 420 ms und eine siebte mit einer Phasendauer von 410 ms betrieben werden, so dass durch die jeweils abnehmenden Zeitdifferenzen, welche zwischen sich den verlängerten Phasendauern und der Ursprungsphasendauer von 400 ms ergeben, eine kontinuierliche und insbesondere als nicht störend wahrnehmbare Anpassung des Leuchtsignals 8 an das Referenzsignal 9 erfolgen.

Bei dieser Art von Anpassung ist es erfindungsgemäß vorgesehen, dass der Betrag, um den die von dem Betätigungszeitpunkt $t_0$ abnehmenden Zeitdifferen-

zwerte $\Delta t_i$ jeweils abnehmen, konstant gehalten wird, so dass die Differenz zwischen zwei aufeinanderfolgenden, abnehmenden Zeitdifferenzwerten jeweils gleich ist, wobei diese Differenz derart gewählt wird, dass in einer Anzahl von vorgegebenen Takten eine Anpassung der Ausgangsphasenlage auf die Zielphasenlage erfolgt. Mithin kann also der Betrag, um den der Zeitdifferenzwert zwischen jeweils zwei aufeinanderfolgenden, verlängerten oder verkürzten Anphasen 10 und/oder Ausphasen 11 abnimmt, stets gleich sein.

Es ist erfindungsgemäß auch eine Kombination zwischen dem in Fig. 3 und dem in Fig. 4 gezeigten Ausführungsbeispiel möglich, wobei zunächst eine vorgegebene Anzahl der Anphasen 10 und/oder Ausphasen 11 jeweils um die maximal zulässige Zeitdifferenz $\Delta t_{max}$ verlängert werden und anschließend ein verbleibender Restwert $\Delta t_{rest}$, welcher dabei auch größer als die maximale Zeitdifferenz $\Delta t_{max}$ sein kann, als mehrere Zeitdifferenzen $\Delta t_i$ über mehrere der Anphasen 10 und/oder Ausphasen 11 ausgeglichen wird. Die mehreren Zeitdifferenzen $\Delta t_i$ können dabei zum Beispiel mit zunehmendem zeitlichen Abstand vom Betätigungszeitpunkt $t_0$ abnehmen, das heißt jeweils geringer werden.

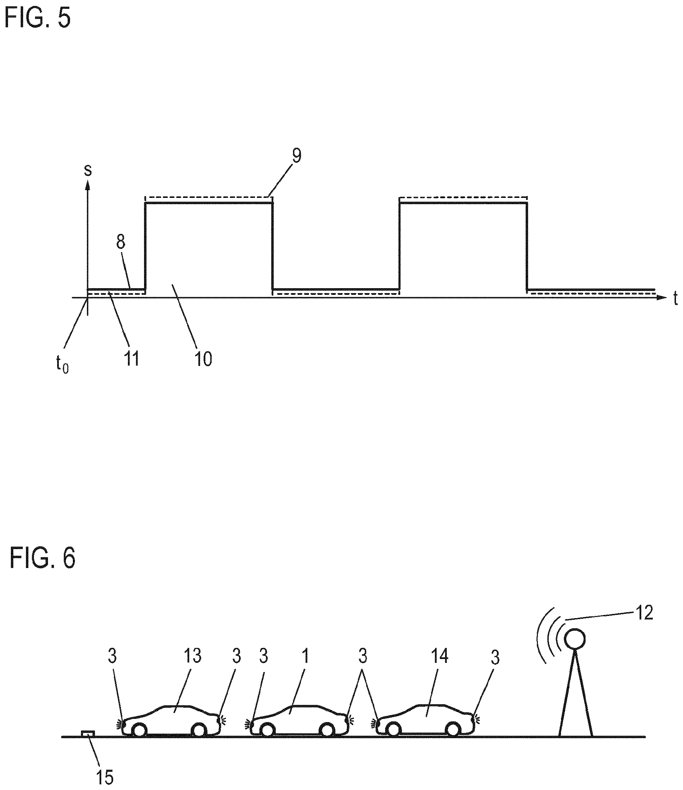

Eine weitere, nicht erfindungsgemäße Möglichkeit zum Anpassen der Phasenlage des Leuchtsignals 8 zu dem Referenzsignal 9 ist in Fig. 5 dargestellt. Dabei wird im Unterschied zu den vorangehend beschriebenen Möglichkeiten das Leuchtsignal 8 zum Betätigungszeitpunkt $t_0$ statt mit einer Anphase 10 mit einer Ausphase 11 begonnen. Die Zeitdauer der ersten Ausphase 11 entspricht dabei dem Phasenversatz zwischen der Ausgangsphasenlage und der vorgegebenen Zielphasenlage zwischen dem Leuchtsignal 8 und dem Referenzsignal 9, so dass bereits die der ersten Ausphase 11 nachfolgende Anphase 10 sich in der Zielphasenlage, welche auch im vorliegenden Beispiel 0° entspricht, befindet. Auch eine Kombination dieses Ausführungsbeispiels mit einem der weiteren Ausführungsbeispiele ist möglich, wobei ein Teil des insgesamt auszugleichenden Zeitversatzes durch die Dauer einer direkt nach dem Betätigungszeitpunkt erfolgende Ausphase ausgebildet wird.

Es ist auch möglich, dass das Leuchtsignal 8 zum Betätigungszeitpunkt $t_0$ mit einer Ausphase beginnt, wenn der anzugleichende Zeitversatz kleiner oder gleich einem Grenzwert, insbesondere einem Wert für die maximale Zeitdifferenz $\Delta t_{max}$, ist, und dass bei einer Zeitdifferenz größer als der Grenzwert bzw. $\Delta t_{max}$ eine Anpassung, wie vorangehend beschrieben wurde, über das Verlängern oder Verkürzen von zwei oder mehr aufeinanderfolgenden Anphasen und/oder Ausphasen vorgenommen wird.

In allen vorangehend beschriebenen Ausführungsbeispielen kann statt einer Verlängerung einer Anphase und einer Ausphase auch nur eine Verlängerung der Anphasen oder nur eine Verlängerung der Ausphasen vorgenommen werden. Zusätzlich oder alternativ dazu ist es auch möglich, dass die Anphasen und/oder die Ausphasen jeweils verkürzt werden. Dabei kann insbesondere ein Verlängern der Anphasen und/oder der Ausphasen erfolgen, wenn der dem Phasenversatz des Leuchtsignals 8 zu dem Referenzsignal 9 entsprechende Zeitversatz größer als die halbe Periodendauer des Leuchtsignals, mithin also die Zeitdauern der Anphasen bzw. Ausphasen, ist. Entsprechend kann ein Verkürzen der Anphase und/oder der Ausphase bzw. der Anphasen oder der Ausphasen erfolgen, wenn der dem Phasenversatz des Leuchtsignals zu dem Referenzsignal entsprechende Zeitversatz kleiner als die halbe Periodendauer des Leuchtsignals 8 ist.

Wie in Fig. 6 dargestellt ist, kann das Referenzsignal des Kraftfahrzeugs 1 von einem lokal oder global empfangbaren Zeitsignal 12 abgeleitet werden. Dies ermöglicht es, dass auch in weiteren Fahrzeugen 13, 14 ein entsprechendes Referenzsignal basierend auf dem lokal oder global empfangenen Zeitsignal erstellt wird, so dass ein synchroner Betrieb der Fahrtrichtungsanzeiger 3, 4 der Kraftfahrzeuge 1, 13, 14 ermöglicht wird.

Dabei kann als Zeitsignal 12 ein eine absolute Zeitinformation umfassendes Signal verwendet werden. Als Zeitsignal kann beispielsweise ein Signal eines globalen Navigationssatellitensystems, z. B. GPS, Galileo, Glonass und/oder Beidou verwendet werden. Auch das Verwenden eines Signals einer Funkuhr, beispielsweise eines DCF77-Signal, des Signals eines analogen Radios wie eines RDS-Signals, oder das Signal eines Digitalradios, wie eines DAB-Signals und/oder eines DAB+-Signals, ist möglich. Das lokal oder global empfangbare Zeitsignal kann auch durch ein Signal eines Mobilfunknetzes, ein Signal eines Kraftfahrzeugkommunikationsnetzes, z. B. eine Car2X-Kommunikationsnetzes, und/oder als Zeitinformation eines anderen Kommunikationsnetzes, z. B. nach dem NTP und/oder dem PTP-Standard, vorliegen.

Das Zeitsignal 12 kann dabei z. B. in einem Unix-Format vorliegen oder von der Steuerungseinrichtung 2 des Kraftfahrzeugs 1 in ein solches überführt werden. Auf diese Weise wird ein Zeitsignal 12 erhalten, welches für alle das Zeitsignal 12 oder ein vergleichbares anderes Zeitsignal empfangenen Kraftfahrzeuge 1, 13, 14 dieselbe Referenz, vornehmlich die geltende Uhrzeit, aufweist. Aus diesen Zeitsignalen 12 können entsprechend die Referenzsignale 9 der einzelnen Kraftfahrzeuge 1, 13, 14 abgeleitet werden, so dass entsprechend durch die Anpassung des Phasenversatzes zwischen dem jeweiligen Leuchtsignal 8 der Kraftfahrzeuge 1, 13, 14 und den z. B. jeweils in gleicher Weise erzeugten Referenzsignalen 9 aus dem Zeitsignal 12 ergibt.

Die als lokal oder global empfangbares Zeitsignal 12 gesendete Unixzeit ist eine Variable mit einer Länge von 32 Bit, welche seit dem 01.01.1970 um 0.00 Uhr alle Sekunden um ein Inkrement hochgezählt wird. Aus diese Zeitwert kann die Zeitdifferenz zu dem vorgenannten Datum und somit die aktuelle Uhrzeit bestimmt werden. Zur Berechnung des Referenzsignals 9 kann diese Unixzeit z. B. in Millisekunden umgerechnet werden und durch die Dauer eines Blinktakts, z. B. 800 ms, mit Rest dividiert werden. Der verbleibende Rest dieser Modulo-Operation stellt dabei für jedes der Kraftfahrzeuge 1, 13, 14 die Abweichung Referenzsignal 9 bzw. zu seinem Solltakt dar, wobei diese abhängig von den jeweiligen Betätigungszeitpunkten der entsprechenden Betätigungsmittel 5 der Kraftfahrzeuge 1, 13, 14 unterschiedlich sein können. Bei einer Abweichung von über 400 ms können z. B. 800 ms subtrahiert werden, so dass entweder positive Werte, um die die entsprechenden Phasen verlängert werden können, oder negative Werte, um die die entsprechenden Phasen verkürzt werden, erhalten werden. Das entsprechende Verlängern oder Verkürzen einzelnen Anphasen und/oder Ausphasen kann dann wie vorangehend beschrieben erfolgen.

Bei ausbleibendem Empfang des Zeitsignals 12 kann für das Taktdifferenzsignal 9 ein kraftfahrzeugseitig vorgegebenes und insbesondere von der Steuerungseinrichtung 2 erzeugtes Taktsignal als Referenzsignal 9 verwendet werden, so dass in einem Fehlerfall weiterhin eine Leuchtsignalgabe erfolgen kann. Bei Nichtverfügbarkeit des Zeitsignals 12 kann auch ein in einer vorangehenden Betätigung eines Fahrtrichtungsanzeigers herangezogenes Referenzsignal 9 extrapoliert werden.

Es ist auch möglich, dass das Referenzsignal und/oder eine Zielphasenlage eines der Kraftfahrzeuge 1, 13, 14 aus einer Umfeldinformation abgeleitet wird, wobei die Umfeldinformation wenigstens einen betätigten Fahrtrichtungsanzeiger eines weiteren Kraftfahrzeugs abbildet. Dabei kann eine Frequenz des Referenzsignals 9 der Frequenz des in der Umfeldinformation abgebildeten Fahrtrichtungsanzeiger 3, 4 des weiteren Kraftfahrzeugs 13, 14 entsprechen. Beispielsweise kann durch eine Sensoreinrichtung des Kraftfahrzeugs 1 ein Blinken des Kraftfahrzeugs 13 erfasst werden, woraufhin von der Steuerungseinrichtung 2 ein Referenzsignal 9 erzeugt wird, welches der Phasenlage und der Frequenz des Blinkens des weiteren Kraftfahrzeugs 13 entspricht. Auf Grundlage dieses Referenzsignals 9 kann das Kraftfahrzeug 1 nun eine Zielphasenlage einstellen und somit sein eigenes Blinken, das heißt das eigene Darstellen des Leuchtsignals 8 über die Fahrtrichtungsanzeiger 3, vornehmen. Ein Erfassen des Blinkens des Kraftfahrzeugs 13 kann dabei beispielsweise über eine mit der Steuerungseinrichtung 2 verbundene, eine Kamera umfassende Sensoreinrichtung des Kraftfahrzeugs 1 erfolgen.

Es ist möglich, dass das Referenzsignal und/oder die Zielphasenlage in Abhängigkeit einer Umgebungsinformation des Kraftfahrzeugs 1 ermittelt wird. Dazu kann beispielsweise als Umgebungsinformation ein Abstand des Kraftfahrzeuges 1 zu einer Haltelinie 15 verwendet werden. Dies ermöglicht es, dass, wenn die Kraftfahrzeuge 1, 13, 14 jeweils zur Durchführung des Verfahrens ausgebildet sind, ein synchrones Blinken der Fahrtrichtungsanzeiger 3 einzustellen. Das synchrone Blinken kann dabei im Gleichtakt erfolgen. Es ist auch möglich, dass die sich beispielsweise auf einer Linksabbiegerspur befindlichen Kraftfahrzeuge 1, 13, 14 ihre Fahrtrichtungsanzeiger 3 jeweils derart zu einem synchronen Blinken ansteuern, dass sich ein Laufsignal, welches von dem Fahrzeug 13 über das Fahrzeug 1 zum Fahrzeug 14 läuft, einstellt. Ein solches Lauflicht kann durch Zuweisen unterschiedlicher Zielphasenlagen in den Kraftfahrzeugen 13, 1, 14 erfolgen. Diese Zielphasenlage kann für jedes der Kraftfahrzeuge 1, 13, 14 beispielsweise abhängig von einem Abstand zu der Haltelinie 15 gewählt werden.

Es ist auch möglich, dass das Referenzsignal und/oder die Zielphasenlage in Abhängigkeit einer von einem weiteren Kraftfahrzeug 13, 14 über eine Kommunikationsverbindung an das Kraftfahrzeug 1 übermittelten Phaseninformation ermittelt wird. Als Kommunikationsverbindung können dabei beispielsweise eine Car2X-Kommunikation, eine Visibile Light-Communication (VLC) und/oder eine Light-Fidelity-Kommunikation (LiFi) verwendet werden. Die Kommunikation der Kraftfahrzeuge 1, 13, 14 untereinander ermöglicht es, dass die Kraftfahrzeuge für ein Synchronblinken, und insbesondere für die Darstellung eines Lauflichts oder Ähnlichem, unterschiedliche Referenzsignale 9 und/oder gleiche Referenzsignale 9 mit unterschiedlichen Zielphasen ermitteln, so dass sich insgesamt der gewünschte Effekt bei der Betätigung der Fahrtrichtungsanzeiger 3 ergibt.

Um bei dem Kraftfahrzeug 1 eine möglichst geringe Abweichung zwischen dem Betätigen des Fahrtrichtungsanzeigers 3 bzw. dem Darstellen des Leuchtsignals 8 und einer ermittelten Referenz zu erhalten, kann das Referenzsignal zyklisch aus dem Zeitsignal 12 abgeleitet werden, so dass eine indirekte Synchronisierung auf die für das Zeitsignal 12 herangezogene Referenzzeit möglich ist. Zusätzlich oder alternativ dazu kann auch, insbesondere zyklisch oder kontinuierlich, die Phasenlage des Leuchtsignals 8 zu dem Referenzsignal 9 für die Dauer der Betätigung des Fahrtrichtungsanzeigers 3 mit der Zielphasenlage abgeglichen werden. Bei einer Abweichung der aktuellen Phasenlage von der Zielphasenlage, welche größer als ein vorgegebener und in der Steuerungseinrichtung 2 hinterlegter Grenzwert ist, kann wenigstens eine Anphase und/oder Ausphase des Leuchtsignals um einen Zeitdifferenzwert verlängert oder verkürzt werden, so dass danach die Phasenlage des Leuchtsignals 8 zu dem Referenzsignal wieder der vorgegebenen Zeitphasenlage entspricht. Dies ermöglicht eine direkte Synchronisierung des Leuchtsignals 8, welches von dem Fahrtrichtungsanzeiger 3 dargestellt wird, auf das in der Steuerungseinrichtung 2 ermittelte Referenzsignal.

Dem in den vorliegenden Beispielen der linken Fahrtrichtung zugeordneten Fahrtrichtungsanzeiger 3 und dem der rechten Fahrtrichtung zugeordneten Fahrtrichtungsanzeiger 4 können unterschiedliche Zielphasen für den Bezug zu dem Referenzsignal 9 zugeordnet werden. Dies ermöglicht es, dass ein Blinken an der linken Seite, also über die Fahrtrichtungsanzeiger 3, und ein Blinken auf der rechten Seite, also über die Fahrtrichtungsanzeiger 4, jeweils mit einem Phasenversatz von zum Beispiel 180° zueinander erfolgt. Dies erzeugt bei einer Gruppe von Kraftfahrzeugen 1, 13, 14 ein homogenes und gleichförmiges Erscheinungsbild, wobei die in unterschiedlichen Richtungen blinkenden Fahrzeuge aufgrund des Zeitversatzes zwischen den einzelnen Anphasen der Leuchtsignale 8 gut zu unterscheiden sind. Bei einem Warnblinken, das heißt einem zeitgleichen Betätigen bzw. einer zeitgleichen Anphase sowohl der der linken Fahrtrichtung zugeordneten Fahrtrichtungsanzeiger 3 als auch dem der rechten Fahrtrichtung zugeordneten Fahrtrichtungsanzeiger 4 kann ein weiteres Referenzsignal und/oder ein weiterer Zielphasenbezug herangenommen werden. Es ist auch möglich, dass für das Warnblinken der Zielphasenbezug bzw. des Referenzsignals dem Fahrtrichtungsanzeiger 3 oder dem Fahrtrichtungsanzeiger 4 entspricht.

Durch das Anpassen des Phasenversatzes bzw. des Zeitversatzes zwischen dem Leuchtsignal 8 nach dem Betätigungszeitpunkt und dem Referenzsignal 9 kann das Anpassen des Leuchtsignals 8 an das Referenzsignal 9, und somit auch ein Anpassen an einen Synchronblinktakt mehrerer Fahrzeuge, erfolgen. Das Verwenden einer Ausphase zu Beginn des Signals ermöglicht es, dass nur das synchronisierte Blinken sichtbar ist und keine Anpassung der Takte zu erkennen ist. Durch das Verlängern oder Verkürzen einer oder mehrerer Anphasen und/oder Ausphasen kann die Funktion des Blinkersynchronisierens sichtbar gemacht werden, um ein Zusammengehörigkeitsgefühl zwischen den Kraftfahrzeugen 1, 13, 14 zusätzlich zu verstärken.

Das synchronisierte Blinken erzeugt ein einheitliches Blinksignal, welches zu einem einheitlichen und Straßenbild führt. Eventuell vorhandene Phasenunterschiede zwischen einem Linksblinken und einem Rechtsblinken tragen zur verbesserten Verkehrswahrnehmung bei, da in unterschiedliche Richtungen Blinksignale abgebende Fahrzeuge besser voneinander unterschieden werden können.

Ein bevorzugtes Ausführungsbeispiel des Verfahrens verwendet als Zeitsignal 12 die Unixzeit, welche aus einem von den Kraftfahrzeugen 1, 13, 14 empfangenen GPS-Signal erhalten wird. Die Verwendung eines GPS-Signals zum Erhalt der Unixzeit weist dabei den Vorteil auf, dass die Unixzeit in dem GPS-Signal in hoher Genauigkeit vorliegt, da diese im Rahmen eines GPS-Systems für die Positionsermittlung benötigt wird. Alternativ kann die Unixzeit auch aus einer anderen Quelle bzw. einer anderen Art von Signal herangezogen werden.

Aus der zum Beispiel in Millisekunden seit dem 01.01.1970 um 0:00:00,00 Uhr UTC, der sogenannten Unix-Epoche, hochgezählten Unixzeit wird dabei das Referenzsignal 9 abgeleitet, wobei das Referenzsignal 9 zum Zeitpunkt der Unix-Epoche mit einer Anphase beginnt. Der durch das Referenzsignal 9 vorgegebene Takt des Leuchtsignals 8 hat dabei eine Dauer von 800 ms, wobei der Takt eine Anphase und eine Ausphase von jeweils 400 ms Dauer umfasst. Auch die Leuchtsignale 8 der Kraftfahrzeuge 1, 13, 14 weisen zumindest ab dem Einstellen des Zielphasenversatzes in einem Richtungsblinkbetrieb und einem Warnblinkbetrieb der Fahrtrichtungsanzeiger 3 und/oder der Fahrtrichtungsanzeiger 4 entsprechend Anphasen und Ausphasen von jeweils 400 ms auf.

Wie in Bezug zu den vorangehenden Ausführungsbeispielen beschrieben wurde, kann das Leuchtsignal 8 ab dem Betätigungszeitpunkt an das Referenzsignal 9 angepasst werden, wobei in diesem Ausführungsbeispiel eine Zielphasenlage von 0° eingestellt wird. Dies führt dazu, dass die Kraftfahrzeuge 1, 13, 14 spätestens ab dem Erreichen der Zielphasenlage synchron zueinander blinken.

Ab dem Erreichen der Zielphasenlage blinken die Leuchtsignale 8 der Kraftfahrzeuge 1, 13, 14 auch synchron zu dem aus der Unixzeit abgeleiteten Referenzsignal 9, wobei die Leuchtsignale 8 ab dem Erreichen der Zielphasenlage Anphasen und Ausphasen von jeweils 400 ms aufweisen. Durch die Synchronisierung auf das Referenzsignal blinken die Kraftfahrzeuge 1, 13, 14 mithin so, als ob sie seit der Unix-Epoche beginnend mit einer Anphase und einer Dauer des Takts von 800 ms blinken würden. Für eine Gruppe von Kraftfahrzeugen 1, 13, 14 kann auf diese Weise ein einheitliches Blinken erreicht werden.

**Patentansprüche**

1. Verfahren zum Betreiben wenigstens eines Fahrtrichtungsanzeigers (3, 4) eines Kraftfahrzeugs (1), wobei der Fahrtrichtungsanzeiger (3, 4) ab einem Betätigungszeitpunkt ein Leuchtsignal (8) ausgibt, welches aus einer periodischen Wiederholung von abwechselnd aufeinanderfolgenden Anphasen (10), in denen wenigstens ein Beleuchtungsmittel des Fahrtrichtungsanzeigers (3, 4) leuchtet, und Ausphasen (11), in denen das Beleuchtungsmittel ausgeschaltet ist, besteht, wobei zum Betätigungszeitpunkt eine Abweichung einer Ausgangsphasenlage des Leuchtsignals (8) zu einem vorgegebenen Referenzsignal (9) ermittelt und mit einer vorgegebenen, dem Fahrtrichtungsanzeiger (3, 4) zugeordneten Zielphasenlage verglichen wird, wobei bei einem Vorliegen eines Phasenversatzes zwischen der Ausgangsphasenlage und der Zielphasenlage

- wenigstens zwei der Anphasen (10) und/oder der Ausphasen (11) des Leuchtsignals (8) nach dem Betätigungszeitpunkt um jeweils einen unterschiedlichen Zeitdifferenzwert verlängert oder verkürzt werden, so dass danach die Phasenlage des Leuchtsignals (8) zu dem Referenzsignal (9) der vorgegebenen Zielphasenlage entspricht,

- **dadurch gekennzeichnet, dass** mehrere aufeinanderfolgende Anphasen (10) und/oder Ausphasen (11) jeweils um einen mit zunehmendem zeitlichen Abstand vom Betätigungszeitpunkt abnehmenden Zeitdifferenzwert verlängert oder verkürzt werden, wobei der Betrag, um den der Zeitdifferenzwert zwischen jeweils zwei aufeinanderfolgenden, verlängerten oder verkürzten Anphasen (10) und/oder Ausphasen (11) abnimmt, stets gleich ist.

2. Verfahren nach Anspruch 1,
   **dadurch gekennzeichnet,**
   **dass** eine Anphase (10) und/oder Ausphase (11) oder mehrere aufeinanderfolgende Anphasen (10) und/oder Ausphasen (11) jeweils um einen vorgegebenen, maximalen Zeitdifferenzwert verlängert oder verkürzt werden, wobei eine der wenigstens einen um den maximalen Zeitdifferenzwert verlängerten oder verkürzten Phase nachfolge Anphase (10) oder Ausphase (11) um einen Restzeitdifferenzwert, welcher kleiner als der maximale Zeitdifferenzwert ist, verlängert oder verkürzt wird.

3. Verfahren nach einem der vorangehenden Ansprüche,
   **dadurch gekennzeichnet,**
   **dass** die Anphase (10) und/oder die Ausphase (11) oder die Anphasen (10) und/oder die Ausphasen (11) verlängert werden, wenn der dem Phasenversatz des Leuchtsignals zu dem Referenzsignal (9) entsprechende Zeitversatz größer als die halbe Periodendauer des Leuchtsignals (8) ist, und dass die Anphase (10) und/oder die Ausphase (11) oder die Anphasen (10) und/oder die Ausphasen (11) verkürzt werden, wenn der dem Phasenversatz des Leuchtsignals (8) zu dem Referenzsignal (9) entsprechende Zeitversatz kleiner als die halbe Periodendauer des Leuchtsignals (8) ist.

4. Verfahren nach einem der vorangehenden Ansprüche,
   **dadurch gekennzeichnet,**
   **dass** das Referenzsignal (9), insbesondere zyklisch oder kontinuierlich, von wenigstens einem lokal oder global empfangbaren Zeitsignal (12) abgeleitet wird.

5. Verfahren nach Anspruch 4,
   **dadurch gekennzeichnet,**
   **dass** als Zeitsignal (12) ein Signal eines globalen Navigationssatellitensystems, ein Signal einer Funkuhr, ein Signal eines analogen Radios, ein Signal eines Digitalradios, ein Signal eines Mobilfunknetzes, ein Signal eines Kraftfahrzeugkommunikationsnetzes und/oder eine Zeitinformation eines Kommunikationsnetzes verwendet wird.

6. Verfahren nach Anspruch 4 oder 5,
   **dadurch gekennzeichnet,**
   **dass** bei ausbleibendem Empfang des Zeitsignals (12) ein kraftfahrzeugseitig vorgegebenes Taktsignal als Referenzsignal (9) verwendet wird.

7. Verfahren nach einem der Ansprüche 4 bis 6,
   **dadurch gekennzeichnet,**
   **dass** als Zeitsignal eine Unixzeit verwendet wird, wobei der durch das Referenzsignal (9) vorgegebene Takt des Leuchtsignals (8) zu der dem Zeitpunkt 01.01.1970, 0:00:00,00 nach standardisierter Weltzeit entsprechenden Unix-Epoche mit einer Anphase beginnt.

8. Verfahren nach einem der vorangehenden Ansprüche,
   **dadurch gekennzeichnet, dass** die Dauer der Anphasen und der Ausphasen des Leuchtsignals (8) in der Zielphasenlage, insbesondere in einem Richtungsblinkbetrieb und/oder einem Warnblinkbetrieb des Fahrtrichtungsanzeigers (3, 4), jeweils 400 ms beträgt.

9. Verfahren nach einem der vorangehenden Ansprüche,
   **dadurch gekennzeichnet,**
   **dass** das Referenzsignal (9) und/oder die Zielphasenlage aus einem von einer Sensoreinrichtung des den Fahrtrichtungsanzeiger (3, 4) aufweisenden Kraftfahrzeugs (1) erfassten Umfeldinformation abgeleitet wird, wobei die Umfeldinformation wenigstens einen betätigten Fahrtrichtungsanzeiger (3, 4) eines weiteren Kraftfahrzeugs (13, 14) abbildet, wobei eine Frequenz des Referenzsignals (9) der Frequenz des in der Umfeldinformation abgebildeten Fahrtrichtungsanzeiger (3, 4) des weiteren Kraftfahrzeugs (13, 14) entspricht.

10. Verfahren nach einem der vorangehenden Ansprüche,
    **dadurch gekennzeichnet,**
    **dass** das Referenzsignal (9) und/oder die Zielphasenlage in Abhängigkeit einer Umgebungsinformation des den Fahrtrichtungsanzeiger (3, 4) aufweisenden Kraftfahrzeugs (1) und/oder einer von einem weiteren Kraftfahrzeug (13, 14) über eine Kommunikationsverbindung übermittelten Phaseninformation ermittelt wird.

11. Verfahren nach Anspruch 10,
    **dadurch gekennzeichnet,**
    **dass** als Umgebungsinformation ein Abstand des Kraftfahrzeugs (1) zu einer Haltelinie (15) verwendet wird.

12. Verfahren nach einem der vorangehenden Ansprüche,

**dadurch gekennzeichnet,**
**dass** die Phasenlage des Leuchtsignals (8) zu dem Referenzsignal (9) für die Dauer der Betätigung des Fahrtrichtungsanzeigers (3, 4), insbesondere zyklisch oder kontinuierlich, mit der Zielphasenlage abgeglichen wird, wobei bei einer Abweichung der Phasenlage von der Zielphasenlage, welche größer als ein vorgegebener Grenzwert ist, wenigstens eine Anphase (10) und/oder Ausphase (11) des Leuchtsignals (8) um einen Zeitdifferenzwert verlängert oder verkürzt werden, so dass danach die Phasenlage des Leuchtsignals (8) zu dem Referenzsignal (9) der vorgegebenen Zielphasenlage entspricht.

13. Verfahren nach einem der vorangehenden Ansprüche,
**dadurch gekennzeichnet,**
**dass** wenigstens zwei jeweils einer unterschiedlichen Fahrtrichtung und/oder einer Warnsignalgabe zugeordnete Fahrtrichtungsanzeiger (3, 4) verwendet werden, wobei jeweils ein gleicher oder für die anzuzeigenden Fahrtrichtungen und/oder die Warnsignalgabe jeweils eine unterschiedliche Zielphasenlage verwendet wird.

14. Kraftfahrzeug umfassend wenigstens einen Fahrtrichtungsanzeiger (3, 4) und eine Steuerungseinrichtung (2), wobei die Steuerungseinrichtung (2) zur Durchführung eines Verfahrens nach einem der vorangehenden Ansprüche eingerichtet ist.

**Claims**

1. Method for operating at least one direction indicator (3, 4) of a motor vehicle (1), wherein the direction indicator (3, 4) outputs a light signal (8) as of an actuation time, which light signal consists of a periodic repetition of alternately successive on phases (10) in which at least one lighting means of the direction indicator (3, 4) lights up, and off phases (11) in which the lighting means is switched off, wherein, at the actuation time, a deviation of an initial phase position of the light signal (8) with respect to a predefined reference signal (9) is ascertained and compared with a predefined target phase position assigned to the direction indicator (3, 4), wherein, if there is a phase offset between the initial phase position and the target phase position,

- at least two of the on phases (10) and/or off phases (11) of the light signal (8) are extended or shortened by a different time difference value in each case after the actuation time, such that the phase position of the light signal (8) with respect to the reference signal (9) then corresponds to the predefined target phase position,
- **characterized in that**

a plurality of successive on phases (10) and/or off phases (11) are each extended or shortened by a time difference value decreasing as the temporal distance from the actuation time increases, wherein the amount by which the time difference value between two successive, extended or shortened on phases (10) and/or off phases (11) decreases in each case is always equal.

2. Method according to Claim 1,
**characterized**
**in that** an on phase (10) and/or off phase (11) or a plurality of successive on phases (10) and/or off phases (11) are each extended or shortened by a predefined maximum time difference value, wherein one of the at least one on phase (10) or off phase (11) following a phase extended or shortened by the maximum time difference value is extended or shortened by a residual time difference value which is less than the maximum time difference value.

3. Method according to either of the preceding claims,
**characterized**
**in that** the on phase (10) and/or the off phase (11) or the on phases (10) and/or the off phases (11) are extended if the time offset corresponding to the phase offset of the light signal with respect to the reference signal (9) is greater than half the period duration of the light signal (8), and in that the on phase (10) and/or the off phase (11) or the on phases (10) and/or the off phases (11) are shortened if the time offset corresponding to the phase offset of the light signal (8) with respect to the reference signal (9) is less than half the period duration of the light signal (8).

4. Method according to one of the preceding claims,
**characterized**
**in that** the reference signal (9) is derived, in particular cyclically or continuously, from at least one locally or globally receivable time signal (12).

5. Method according to Claim 4,
**characterized**
**in that** the time signal (12) used is a signal from a global navigation satellite system, a signal from a radio clock, a signal from an analogue radio, a signal from a digital radio, a signal from a mobile radio network, a signal from a motor vehicle communication network and/or time information from a communication network.

6. Method according to Claim 4 or 5,
**characterized**
**in that** if the time signal (12) is not received, a clock signal predefined by the motor vehicle is used as the reference signal (9).

**7.** Method according to one of Claims 4 to 6, **characterized in that** the time signal used is a Unix time, wherein the clock of the light signal (8) predefined by the reference signal (9) begins with an on phase at the Unix epoch corresponding to the time 01.01.1970, 0:00:00,00 according to standardized world time.

**8.** Method according to one of the preceding claims, **characterized in that** the duration of the on phases and off phases of the light signal (8) in the target phase position, in particular in a direction flashing mode and/or a warning flashing mode of the direction indicator (3, 4), is 400 ms in each case.

**9.** Method according to one of the preceding claims, **characterized in that** the reference signal (9) and/or the target phase position is derived from environmental information acquired by a sensor device of the motor vehicle (1) having the direction indicator (3, 4), wherein the environmental information maps at least one actuated direction indicator (3, 4) of a further motor vehicle (13, 14), wherein a frequency of the reference signal (9) corresponds to the frequency of the direction indicator (3, 4) of the further motor vehicle (13, 14) mapped in the environmental information.

**10.** Method according to one of the preceding claims, **characterized in that** the reference signal (9) and/or the target phase position are/is ascertained on the basis of environmental information of the motor vehicle (1) having the direction indicator (3, 4) and/or phase information transmitted by a further motor vehicle (13, 14) via a communication link.

**11.** Method according to Claim 10, **characterized in that** the environmental information used is a distance between the motor vehicle (1) and a stop line (15).

**12.** Method according to one of the preceding claims, **characterized in that** the phase position of the light signal (8) with respect to the reference signal (9) is matched, in particular cyclically or continuously, to the target phase position for the duration of the actuation of the direction indicator (3, 4), wherein, if there is a deviation of the phase position from the target phase position greater than a predefined limit value, at least one on phase (10) and/or off phase (11) of the light signal (8) is extended or shortened by a time difference value, such that the phase position of the light signal (8) with respect to the reference signal (9) then corresponds to the predefined target phase position.

**13.** Method according to one of the preceding claims, **characterized in that** at least two direction indicators (3, 4) each assigned to a different direction and/or a warning signal output are used, wherein in each case an identical or a different target phase position for the directions to be indicated and/or the warning signal output in each case is used.

**14.** Motor vehicle comprising at least one direction indicator (3, 4) and a control device (2), wherein the control device (2) is set up to carry out a method according to one of the preceding claims.

**Revendications**

**1.** Procédé pour faire fonctionner au moins un indicateur de direction (3, 4) d'un véhicule automobile (1), dans lequel l'indicateur de direction (3, 4) émet, à partir d'un moment d'actionnement, un signal lumineux (8) qui est constitué d'une répétition périodique de phases actives (10) successives, dans lesquelles au moins un moyen d'éclairage de l'indicateur de direction (3, 4) est allumé, et de phases inactives (11), dans lesquelles le moyen d'éclairage est éteint ; au moment de l'actionnement, un écart entre une position de phase initiale du signal lumineux (8) et un signal de référence prédéfini (9) est déterminé et est comparé à une position de phase cible prédéfinie associée à l'indicateur de direction (3, 4) ; en présence d'un déphasage entre la phase initiale et la phase cible,

au moins deux des phases actives (10) et/ou des phases inactives (11) du signal lumineux (8) sont allongées ou raccourcies après le moment d'actionnement d'une valeur de différence de temps différente, de sorte qu'ensuite, la position de phase du signal lumineux (8) corresponde au signal de référence (9) de la position de phase cible prédéfinie,
**caractérisé en ce que**
plusieurs phases actives (10) et/ou phases inactives (11) successives sont allongées ou raccourcies chacune d'une valeur de différence de temps qui diminue à mesure que l'intervalle de temps par rapport au moment d'actionnement augmente, la valeur absolue de cette différence de temps étant toujours la même, de sorte que la valeur de la différence de temps entre deux phases actives (10) et/ou phases inactives (11) successives allongées ou raccourcies soit toujours la même.

**2.** Procédé selon la revendication 1,

**caractérisé**
**en ce qu'**une phase active (10) et/ou une phase inactive (11) ou plusieurs phases actives (10) et/ou phases inactives (11) successives sont chacune allongées ou raccourcies d'une valeur de différence de temps maximale prédéfinie, l'une desdites au moins une phase active (10) ou phase inactive (11) qui suit la phase allongée ou raccourcie de la valeur de différence de temps maximale étant raccourcie d'une valeur de différence de temps résiduelle qui est inférieure à la valeur de différence de temps maximale.

3. Procédé selon l'une des revendications précédentes, **caractérisé**
**en ce que** la phase active (10) et/ou la phase inactive (11) ou les phases actives (10) et/ou les phases inactives (11) sont allongées lorsque le décalage temporel correspondant au décalage de phase du signal lumineux par rapport au signal de référence (9) est supérieur à la moitié de la durée de période du signal lumineux (8), et **en ce que** la phase active (10) et/ou la phase inactive (11) ou les phases actives (10) et/ou les phases inactives (11) sont raccourcies lorsque le décalage temporel correspondant au décalage de phase du signal lumineux (8) par rapport au signal de référence (9) est inférieur à la moitié de la période du signal lumineux (8).

4. Procédé selon l'une des revendications précédentes, **caractérisé**
**en ce que** le signal de référence (9) est dérivé, en particulier de manière cyclique ou continue, d'au moins un signal de temps (12) apte à être reçu localement ou globalement.

5. Procédé selon la revendication 4, **caractérisé**
**en ce qu'**il est utilisé comme signal de temps (12) un signal d'un système global de navigation par satellite, un signal d'une horloge radio, un signal d'une radio analogique, un signal d'une radio numérique, un signal d'un réseau de téléphonie mobile, un signal d'un réseau de communication pour véhicules automobiles et/ou une information de temps d'un réseau de communication.

6. Procédé selon la revendication 4 ou la revendication 5, **caractérisé**
**en ce qu'**en cas d'absence de réception du signal de temps (12), un signal d'horloge prédéfini côté véhicule automobile est utilisé comme signal de référence (9).

7. Procédé selon l'une des revendications 4 à 6, **caractérisé**
**en ce qu'**un temps Unix est utilisé comme signal de temps, l'horloge du signal lumineux (8) prédéfinie par le signal de référence (9) commençant par une phase active à l'époque Unix correspondant à l'instant 01/01/1970, 0:00:00,00 selon le temps universel normalisé.

8. Procédé selon l'une des revendications précédentes, **caractérisé**
**en ce que** la durée des phases actives et des phases inactives du signal lumineux (8) dans la position de phase cible, en particulier dans un mode de clignotement directionnel et/ou un mode de clignotement d'avertissement du dispositif indicateur de direction (3, 4), est dans chaque cas de 400ms.

9. Procédé selon l'une des revendications précédentes, **caractérisé**
**en ce que** le signal de référence (9) et/ou la position de phase cible est dérivé(e) d'une information d'environnement détectée par un dispositif formant capteur que présente le véhicule automobile (1) comprenant l'indicateur de direction (3, 4), l'information d'environnement représentant ledit au moins un indicateur de direction actionné (3, 4) d'un autre véhicule automobile (13, 14), une fréquence du signal de référence (9) correspondant à la fréquence de l'indicateur de direction (3, 4) dudit autre véhicule automobile (13, 14) représenté dans l'information d'environnement.

10. Procédé selon l'une des revendications précédentes, **caractérisé**
**en ce que** le signal de référence (9) et/ou la position de phase cible sont déterminés en fonction d'une information d'environnement du véhicule automobile (1) comprenant l'indicateur de direction (3, 4) et/ou d'une information de phase transmise par un autre véhicule automobile (13, 14) via une liaison de communication.

11. Procédé selon la revendication 10, **caractérisé**
**en ce que** l'information d'environnement utilisée est une distance entre le véhicule automobile (1) et une ligne d'arrêt (15).

12. Procédé selon l'une des revendications précédentes, **caractérisé**
**en ce que** la position de phase du signal lumineux (8) par rapport au signal de référence (9) est alignée sur la position de phase cible pendant la durée d'actionnement de l'indicateur de direction (3, 4), en particulier de manière cyclique ou continue ; en cas d'écart entre la position de phase et la position de phase cible, supérieur à une valeur limite prédéfinie, au moins une phase active (10) et/ou phase inactive (11) du signal lumineux (8) est allongée ou raccourcie d'une valeur de différence de temps, de sorte que la position de phase du signal lumineux (8) par rapport au signal de référence (9) corresponde à la position de phase cible prédéterminée.

13. Procédé selon l'une des revendications précédentes, **caractérisé**
**en ce qu'**au moins deux indicateurs de direction (3, 4) associés chacun à une direction différente et/ou à un signal d'avertissement sont utilisés, une même position de phase de référence ou une position de phase de référence différente étant utilisée pour les directions à indiquer et/ou pour le signal d'avertissement.

14. Véhicule automobile comprenant au moins un indicateur de direction (3, 4) et un dispositif de commande (2), le dispositif de commande (2) étant agencé pour mettre en œuvre un procédé selon l'une des revendications précédentes.

FIG. 1

FIG. 2

FIG. 3

FIG. 4

FIG. 5

FIG. 6

**IN DER BESCHREIBUNG AUFGEFÜHRTE DOKUMENTE**

**In der Beschreibung aufgeführte Patentdokumente**

- DE 102013002875 A1
- DE 102017219535 A1
- DE 102016220054 B4
- DE 20010768 U1
- US 20120212320 A1
- DE 202013011251 U1